# EUROPEAN PATENT APPLICATION

(11) **EP 4 606 866 A1**
(43) Date of publication of application: **27.08.2025**
(21) Application number: 23879533.0
(22) Date of filing: 21.09.2023
(51) Int. Cl.: C08L 101/00, C08J 3/22, C08K 3/32, C08K 5/49, C08L 23/26

(54) **RESIN COMPOSITION, METHOD FOR PRODUCING RESIN PRODUCT, AND FLAME RETARDANT MASTERBATCH**

(30) Priority: 19.10.2022 JP 2022167971
(71) Applicant: Mitsubishi Chemical Corporation, Tokyo 100-8251 (JP)
(72) Inventor: NISHII, Hiroyuki, Tokyo 100-8251 (JP); MATSUI, Jun, Tokyo 100-8251 (JP)
(74) Representative: Vossius & Partner Patentanwälte Rechtsanwälte mbB
(86) International application number: PCT/JP2023/034223
(87) International publication number: WO 2024/084885

(57) **Abstract**

The present invention provides a technique suitable to increase the degree of freedom in the composition of a flame-retardant resin product. A resin composition in accordance with the present invention contains a thermoplastic resin (A), a phosphorus-based flame retardant (B), and an acid-modified polyolefin-based resin (C). The proportion of the phosphorus-based flame retardant (B) is not less than 70% by mass.

## Description

### Technical Field

The present invention relates to a resin composition, a method for producing a resin product, and a flame retardant masterbatch.

### Background Art

Polyolefin resins are excellent in mechanical properties (bending properties, tensile properties, etc.), chemical resistance, moldability, etc., low in specific gravity, and inexpensive. Therefore, molded products of polyolefin resins are used in various applications such as machines, electric apparatuses, electronic apparatuses, OA apparatuses, car interior and exterior materials, and automotive cars. In these applications, molded products may be required to have flame retardancy. For example, molded products used for the housings (such as frames, casings, exterior parts, and coverings) of electric apparatuses, electronic apparatuses, or OA apparatuses, cables, and the like are required to have high flame retardancy.

The flame retardancy of resin products is increased by blending flame retardants with resin compositions which are materials of the resin products. As such a resin composition containing a flame retardant, a resin composition is known which contains a thermoplastic resin (A), a phosphorus-based flame retardant (B), and a copolymer of α-olefin and unsaturated carboxylic acid (C) in specific proportions (see, for example, Patent Literature 1).

### Citation List

### [Patent Literature]

[Patent Literature 1]
International Publication No. WO 2021/241682

### Summary of Invention

### Technical Problem

Meanwhile, in general, resin products which are required to have flame retardancy are also required to exhibit properties other than the flame retardancy. Therefore, in flame-retardant resin products, it is required to increase the degree of freedom in the composition thereof.

An object of an aspect of the present invention is to provide a technique suitable to increase the degree of freedom in the composition of a flame-retardant resin product.

### Solution to Problem

In order to attain the above object, a resin composition in accordance with an aspect of the present invention includes: a thermoplastic resin (A), a phosphorus-based flame retardant (B), and an acid-modified polyolefin-based resin (C), wherein a proportion of the phosphorus-based flame retardant (B) is not less than 70% by mass.

In order to attain the above object, a method for producing a resin product in accordance with an aspect of the present invention is a method including molding a product resin composition to produce a resin product, the product resin composition being obtained by diluting the above resin composition with a material composition.

In order to attain the above object, a flame retardant masterbatch in accordance with an aspect of the present invention is pellets of the above resin composition.

### Advantageous Effects of Invention

An aspect of the present invention makes it is possible to provide a resin composition which is suitable to increase the degree of freedom in the composition of a flame-retardant resin product, a method for producing a resin product, and a flame retardant masterbatch.

### Description of Embodiments

### [Resin composition]

The following description discusses an embodiment of the present invention in detail. A resin composition in accordance with an embodiment of the present invention contains a thermoplastic resin (A), a phosphorus-based flame retardant (B), and an acid-modified polyolefin-based resin (C).

### [Thermoplastic resin (A)]

The thermoplastic resin is not particularly limited, and examples thereof include polyolefin resins, polycarbonate resins, polyester resins, acrylonitrile styrene resins, ABS resins, polyamide resins, and modified polyphenylene oxides. Note that one of these resins may be used or two or more of these resins may be used. For example, the thermoplastic resin (A) may be a composite resin of two or more thermoplastic resins among the above resins.

The polyolefin resins are not particularly limited, and examples thereof include resins described later. The polyester resins are not particularly limited, and examples thereof include polybutylene terephthalate. The polyamide resins are not particularly limited, and examples thereof include nylon 66 and nylon 6. Among others, in a case where the thermoplastic resin (A) is a polyolefin resin, the present invention is particularly useful.

In the present invention, the "polyolefin resin" means a resin in which the proportion of an olefin unit 4 or a cycloolefin unit to 100 mol% of all constitutional units constituting the resin is not less than 90 mol%. The proportion of an olefin unit or a cycloolefin unit to 100 mol% of all constitutional units constituting the polyolefin resin is preferably not less than 95 mol% and particularly preferably not less than 98 mol%.

Examples of the polyolefin resin include α-olefin polymers such as polyethylene, polypropylene, polybutene, poly(3-methyl-1-butene), poly(3-methyl-1-pentene), and poly(4-methyl-1-pentene); α-olefin copolymers such as ethylene-propylene block or random copolymers, α-olefin having four or more carbon atoms-propylene block or random copolymers, ethylene-methyl methacrylate copolymers, and ethylene-vinyl acetate copolymers; and cycloolefin polymers such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. In the α-olefin having four or more carbon atoms-propylene block or random copolymers, examples of the α-olefins having four or more carbon atoms include butene, 3-methyl-1-butene, 3-methyl-1-pentene, and 4-methyl-1-pentene. One of these polyolefin resins may be used alone or two or more of these polyolefin resins may be used in combination.

The polyolefin resin preferably includes polypropylene. Polypropylene and another polyolefin resin may be used in combination. For example, the polyolefin resin may be a mixture of polypropylene and another α-olefin polymer such as an ethylene-propylene block or random copolymer or an α-olefin having four or more carbon atoms-propylene block or random copolymer.

The polyolefin resin is preferably composed mainly of polypropylene. The proportion of the polypropylene to 100% by mass of the polyolefin resin is preferably not less than 50% by mass and more preferably not less than 60% by mass. In terms of flame retardancy, it is particularly preferable that the polypropylene accounts for 100% by mass of the polyolefin resin.

The melt mass flow rate (MFR) of the thermoplastic resin (A) is preferably not less than 0.1 g/10 minutes and more preferably not less than 0.5 g/10 minutes, but is preferably not more than 80 g/10 minutes and more preferably not more than 60 g/10 minutes. The thermoplastic resin (A) having an MFR equal to or higher than the above lower limit is more excellent in moldability. The thermoplastic resin (A) having an MFR equal to or lower than the above upper limit is more excellent in bending properties, tensile properties, chemical resistance properties, and the like. A preferable combination of the lower limit and the upper limit can be set as appropriate (the same applies to the descriptions below). The MFR of the thermoplastic resin (A) may be, for example, not less than 0.1 g/10 minutes but not more than 80 g/10 minutes, and may be not less than 0.5 g/10 minutes but not less than 60 g/10 minutes. The melt mass flow rate of the thermoplastic resin (A) is measured at a temperature of 230°C and at a load of 2.16 kg in conformity with JIS K7210.

The proportion of the thermoplastic resin (A) to the total mass of the present resin composition is preferably not more than 29% by mass, more preferably not more than 27% by mass, and even more preferably not more than 25% by mass, from the viewpoint of further increasing the amount of the phosphorus-based flame retardant (B) contained in the resin composition. Meanwhile, from the viewpoint of productivity, the proportion is preferably not less than 10% by mass, more preferably not less than 15% by mass, and even more preferably not less than 18% by mass.

The MFR of the polypropylene is preferably not less than 10 g/10 minutes and more preferably not less than 20 g/10 minutes. The polypropylene having high flowability is suitable for the resin composition to be used as a masterbatch.

### [Phosphorus-based flame retardant (B)]

The phosphorus-based flame retardant (B) is a phosphorus compound, i.e., a compound containing a phosphorus atom in a molecule thereof. The phosphorus-based flame retardant (B) exerts a flame retardant effect by causing formation of char during burning of the resin composition. The phosphorus-based flame retardant (B) may be a known phosphorus-based flame retardant, and examples thereof include (poly)phosphoric acid salts and (poly)phosphoric acid esters. The "(poly)phosphoric acid salts" indicate phosphoric acid salts or polyphosphoric acid salts. The "(poly)phosphoric acid esters" indicate phosphoric acid esters or polyphosphoric acid esters. The phosphorus-based flame retardant (B) is preferably solid at 80°C.

The phosphorus-based flame retardant (B) is preferably a (poly)phosphoric acid salt, in terms of the flame retardancy. Examples of the (poly)phosphoric acid salt include ammonium polyphosphate, melamine polyphosphate, piperazine polyphosphate, piperazine orthophosphate, melamine pyrophosphate, piperazine pyrophosphate, melamine polyphosphate, melamine orthophosphate, calcium phosphate, and magnesium phosphate.

Moreover, compounds obtained by replacing melamine or piperazine in the above examples with the other nitrogen compounds can also be similarly used. Examples of the other nitrogen compounds include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptan, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, melamine pyrophosphate, butylene diguanamine, norbornene diguanamine, methylene diguanamine, ethylenedimelamine, trimethylenedimelamine, tetramethylenedimelamine, hexamethylenedimelamine, and 1,3-hexylenedimelamine. One of these (poly)phosphoric acid salts may be used alone or two or more of these (poly)phosphoric acid salts may be used in combination.

Among the above, the phosphorus-based flame retardant (B) is preferably a salt of (poly)phosphoric acid and a nitrogen compound (hereafter, the salt is also referred to as "compound (B1)"). The compound (B1) is an intumescent-based flame retardant. During burning of the resin composition, the compound (B1) causes formation of a surface swelling layer (intumescent) which is foaming char. The formation of the surface swelling layer prevents diffusion of a decomposition product or heat transfer. This leads to exhibition of excellent flame retardancy. Examples of the nitrogen compound in the compound (B1) include ammonia, melamine, piperazine, and the other nitrogen compounds listed above.

Examples of commercially available products of the phosphorus-based flame retardant (B) include ADK STAB (registered trademark) FP-2100J, FP-2200, and FP-2500S (manufactured by ADEKA Corporation).

The proportion of the phosphorus-based flame retardant (B) to the total amount of the resin composition is not less than 70% by mass. It is suitable that the proportion be not less than 70% by mass, from the viewpoint of increasing the flame retardancy of the resin composition and from the viewpoint of causing the resin composition to sufficiently exhibit desired properties other than the flame retardancy. Moreover, it is suitable that the proportion be not less than 70% by mass, to use the resin composition as a flame retardant masterbatch (hereafter also simply referred to as "masterbatch") and to increase the degree of freedom in the composition, other than the flame retardant, of the resin composition which is a material of a resin product (hereafter also referred to as "full compound"). Moreover, that the proportion is not less than 70% by mass makes it possible to cause a resin product to exhibit high flame retardancy and possible to further increase the tensile strength of the resin product, in a case where the phosphorus-based flame retardant (B) and the acid-modified polyolefin-based resin (C), described later, are used in combination as a masterbatch. Moreover, that the proportion is not less than 70% by mass makes it possible to reduce the electrostatic properties of the resin composition. With this, in a case where the resin composition is pelletized and obtained pellets of the resin composition are used as a masterbatch, it is possible to prevent the pellets from being electrically charged and adhering to a container and an inner wall of a hopper or prevent the pellets from adhering to each other. Thus, it is possible to improve the handleability of the pellets.

The proportion of the phosphorus-based flame retardant (B) to the total amount of the resin composition may be not less than 71% by mass, not less than 72% by mass, not less than 73% by mass, or not less than 74% by mass. From the above viewpoints, the proportion is preferably not less than 75% by mass, more preferably not less than 76% by mass, and even more preferably not less than 78% by mass. The proportion may be determined as appropriate from the viewpoint of sufficiently dispersing the phosphorus-based flame retardant (B). From such a viewpoint, the proportion may be not more than 90% by mass, not more than 85% by mass, or not more than 82% by mass.

The ratio (B/A) of the phosphorus-based flame retardant (B) to the thermoplastic resin (A) is preferably not less than 2.4 times, more preferably not less than 3.0 times, and even more preferably not less than 4.0 times, from the viewpoint of the flame retardancy and from the viewpoint of increasing the degree of freedom in the composition of the resin composition or the full compound in a case where the resin composition is used as a masterbatch. Meanwhile, from the viewpoint of the productivity, the ratio may be not more than 9.0 times.

### [Acid-modified polyolefin-based resin (C)]

The acid-modified polyolefin-based resin (C) increases the dispersibility of the phosphorus-based flame retardant (B) in the thermoplastic resin (A). Moreover, by the resin composition containing the acid-modified polyolefin-based resin (C), it is possible to obtain the resin composition containing the phosphorus-based flame retardant (B) at a very high concentration. In the present invention, the "acid-modified polyolefin-based resin (C)" means polyolefin having a structure chemically modified with an acidic monomer, and is, for example, a copolymer of α-olefin and unsaturated carboxylic acid (hereafter also referred to as "copolymer (C)").

The copolymer means a copolymer in which the proportion of an α-olefin unit to 100 mol% of the total of the α-olefin unit and an unsaturated carboxylic acid unit is not less than 20 mol% but not more than 80 mol%. In the copolymer (C), the proportion of the α-olefin unit to 100 mol% of the total of the α-olefin unit and the unsaturated carboxylic acid unit is preferably not less than 30 mol% from the viewpoint of increasing the compatibility of the copolymer (C) with the thermoplastic resin (A), but is preferably not more than 70 mol% from the viewpoint of increasing the compatibility of the copolymer (C) with the phosphorus-based flame retardant (B).

In the copolymer (C), the number of carbon atoms in the α-olefin is preferably not less than 5 but not more than 80. In a case where the number of carbon atoms in the α-olefin is not less than 5, the copolymer (C) tends to have more favorable compatibility, especially, with the polyolefin resin. In a case where the number of carbon atoms in the α-olefin is not more than 80, raw material costs tend to be more favorable. For such reasons, the lower limit of the number of carbon atoms in the α-olefin is more preferably not less than 10, even more preferably not less than 12, still more preferably not less than 15, and particularly preferably not less than 18. For the above reasons, the upper limit of the number of carbon atoms in the α-olefin is more preferably not more than 70, and even more preferably not more than 60.

In the copolymer (C), examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbornan-5-ene-2,3-dicarboxylic acid, and esters, anhydrides, imides, and the like of these unsaturated carboxylic acids. The "(meth)acrylic acid" indicates acrylic acid or methacrylic acid.

Specific examples of the esters, anhydrides, or imides of the unsaturated carboxylic acids include: (meth)acrylic acid esters such as methyl (meth)acrylate, ethyl (meth)acrylate, butyl (meth)acrylate, 2-ethylhexyl (meth)acrylate, and glycidyl (meth)acrylate; dicarboxylic acid anhydrides such as maleic anhydride, itaconic anhydride, citraconic anhydride, and 5-norbornene-2,3-dicarboxylic acid anhydride; and maleimide compounds such as maleimide, N-ethylmaleimide, and N-phenylmaleimide.

As the above unsaturated carboxylic acid, one of these may be used alone or two or more of these may be used in combination. Among the above, the esters of the unsaturated carboxylic acids or the dicarboxylic acid anhydrides are preferable in terms of copolymerization reactivity. Among others, the dicarboxylic acid anhydrides are preferable, and maleic anhydride is particularly preferable, in terms of the compatibility with the phosphorus-based flame retardant (B).

The weight-average molecular weight of the copolymer (C) is preferably not less than 2,000 and more preferably not less 3,000, but is preferably not more than 50,000 and more preferably not more than 30,000. The copolymer (C) having a weight-average molecular weight falling within the range of the above lower limit to the above upper limit makes the dispersibility of the phosphorus-based flame retardant (B) more excellent. The weight-average molecular weight of the copolymer (C) may be, for example, not less than 2,000 but not more than 50,000, or may be not less than 3,000 but not more than 30,000. The weight-average molecular weight of the copolymer (C) is a standard polystyrene-equivalent value measured by gel permeation chromatography after the copolymer (C) is dissolved in tetrahydrofuran (THF).

Examples of commercially available products of the copolymer (C) include Licolub (registered trademark) CE2 (manufactured by Clariant Japan KK) and DIACARNA (registered trademark) 30M (manufactured by Mitsubishi Chemical Corporation).

In the resin composition, it is possible to determine the proportion of the acid-modified polyolefin-based resin (C) as appropriate from the viewpoint of sufficiently dispersing the phosphorus-based flame retardant (B). The proportion is preferably not more than 10% by mass, more preferably not more than 5% by mass, even more preferably not more than 4.8% by mass, and particularly preferably not more than 4.6% by mass, from the viewpoint of increasing the tensile properties of the resin composition. From the viewpoint of favorably dispersing the phosphorus-based flame retardant (B) in the resin composition, the proportion is preferably not less than 1% by mass, more preferably not less than 2% by mass, and more preferably not less than 3% by mass.

In a case where the proportion of the acid-modified polyolefin-based resin (C) to the phosphorus-based flame retardant (B) is within the above range, it is possible to obtain a resin product having high flame retardancy while maintaining a high mechanical strength and a high bending elastic modulus, when the resin composition is used as a masterbatch. From the above viewpoint, the proportion of the acid-modified polyolefin-based resin (C) to the phosphorus-based flame retardant (B) in the resin composition may be, for example, not more than 15% by mass, not more than 12% by mass, not more than 10% by mass, or not more than 9% by mass, but not less than 1% by mass, not less than 2% by mass, not less than 3% by mass, not less than 4% by mass, not less than 5% by mass, or not less than 6% by mass.

The ratio of the phosphorus-based flame retardant (B) to the acid-modified polyolefin-based resin (C) is preferably not less than 15 or preferably not less than 20, from the viewpoint of obtaining a resin product having high flame retardancy while maintaining a high mechanical strength and a high bending elastic modulus, when the resin composition is used as a masterbatch. From the viewpoint of the stability of the composition as a masterbatch or the stability of the performance of the masterbatch, the ratio is preferably not more than 25, preferably not more than 20, or preferably not more than 18.

The proportion of the total mass of the thermoplastic resin (A), the phosphorus-based flame retardant (B), and the acid-modified polyolefin-based resin (C) to the total mass of the resin composition in accordance with the present embodiment is not particularly limited, but is preferably high from the viewpoint of increasing the degree of freedom in the composition when the resin composition is used as a masterbatch. From this viewpoint, the proportion is preferably not less than 90% by mass, more preferably not less than 95% by mass, and even more preferably not less than 99% by mass.

### [Other components]

The resin composition in accordance with the present embodiment may further contain a component(s) other than the thermoplastic resin (A), the phosphorus-based flame retardant (B), and the acid-modified polyolefin-based resin (C), provided that the effects of the present invention are brought about. The other component(s) may be of one type or two or more types. The type(s) and the amount(s) of the other component(s) may be determined as appropriate, provided that the effects of the present invention and the effect(s) of the other component(s) are both brought about. Examples of the other component(s) include: flame retardants other than the phosphorus-based flame retardant (B); and auxiliary flame retardants.

### <Other flame retardants and auxiliary flame retardants>

The other flame retardants are preferably organic or inorganic flame retardants which do not contain halogen. Similarly, the auxiliary flame retardants are preferably organic or inorganic auxiliary flame retardants which do not contain halogen. Examples of such flame retardants or auxiliary flame retardants include triazine ring-containing compounds, silicone-based flame retardants, metal hydroxides, metal oxides, boric acid compounds, expandable graphites, and fluorine-based anti-dripping agents.

Examples of the triazine ring-containing compounds include melamine, ammeline, benzoguanamine, acetoguanamine, phthalodiguanamine, melamine cyanurate, butylene diguanamine, norbornene diguanamine, methylene diguanamine, ethylenedimelamine, trimethylenedimelamine, tetramethylenedimelamine, hexamethylenedimelamine, and 1,3-hexylenedimelamine. Examples of the silicone-based flame retardants include silicone oil, silicone rubber, and silicone resin. Examples of the metal hydroxides include magnesium hydroxide, aluminum hydroxide, calcium hydroxide, barium hydroxide, zinc hydroxide, and KISUMA 5A (registered trademark of magnesium hydroxide manufactured by Kyowa Chemical Industry Co., Ltd.). Examples of the metal oxides include: inorganic compounds such as zinc oxide, titanium oxide, aluminum oxide, magnesium oxide, titanium dioxide, and hydrotalcite; and surface treated products thereof. Specific examples of the metal oxides include TIPAQUE R-680 (registered trademark of titanium oxide manufactured by Ishihara Sangyo Kaisha, Ltd.), Kyowamag 150 (registered trademark of magnesium oxide manufactured by Kyowa Chemical Industry Co., Ltd.), DHT-4A (hydrotalcite: manufactured by Kyowa Chemical Industry Co., Ltd.), and ALCAMIZER 4 (registered trademark of zinc-modified hydrotalcite manufactured by Kyowa Chemical Industry Co., Ltd.). Examples of the boric acid compounds include zinc borate. Examples of the fluorine-based anti-dripping agents include polytetrafluoroethylene (PTFE). One of these flame retardants or auxiliary flame retardants may be used alone or two or more of these flame retardants or auxiliary flame retardants may be used in combination.

In addition to the above components, the present resin composition can contain an additive usually used in synthetic resins, for example, an additive such as a crosslinking agent, an antistatic agent, metal soap, a filler, an anti-fogging agent, a plate-out inhibitor, a surface treatment agent, a fluorescent agent, a fungicide, a sterilizer, a blowing agent, a metal deactivator, a mold releasing agent, a pigment, or a processing aid, provided that the effects of the present invention are brought about.

The resin composition in accordance with the present invention can contain a variety of additives and the like as described above. However, in a case where the resin composition is used as a flame retardant masterbatch, the amount of an inorganic filler which is derived from a mineral such as calcium carbonate or talc and which is contained in the resin composition is preferably not more than 5% by mass. In this case, the handleability as a masterbatch is improved. From a similar viewpoint, the amount is more preferably not more than 3% by mass, even more preferably not more than 2% by mass, and particularly preferably not more than 1% by mass.

### [Method for producing resin composition]

Any method is employed so as to produce the resin composition. For example, a method can be employed in which (i) the thermoplastic resin (A), the phosphorus-based flame retardant (B), the acid-modified polyolefin-based resin (C), and, as necessary, the other component(s) such as the other flame retardant(s) or an auxiliary flame retardant(s) are sufficiently mixed with use of a premixing means such as a V-type blender, a Henschel mixer, a mechanochemical device, or an extrusion mixer, (ii) if necessary, an obtained mixture is granulated with use of an extrusion granulator, a briquetting machine, or the like, and then (iii) the mixture is melt-kneaded and extruded with use of a melt-kneading machine. Examples of the melt-kneading machine include twin screw extruders (such as vent-type twin screw extruder), Banbury mixers, kneading rollers, single screw extruders, and multi-screw extruders having three or more screws. The temperature during melt-kneading is, for example, 170°C to 260°C. The form of the resin composition extruded as described above is not limited. However, in a case where the resin composition is used as a masterbatch as a material of a resin product, the resin composition is preferably in the form of pellets, from the viewpoint of the handleability and from the viewpoint of easily kneading the resin composition with the other materials. In this case, the resin composition melt-kneaded as described above may be directly pelletized by being cut by a machine such as a pelletizer. Alternatively, the resin composition may be cooled and formed into a strand, and then the strand may be pelletized by being cut by a machine such as a pelletizer. Alternatively, a mass of the resin composition which has been separately formed into a molded product may be pelletized by being ground. Note, here, that the pellets refer to fine pieces of the resin composition which each have a size such that the length of a major axis is 0.1 mm to 10 mm, irrespective of the production method.

The resin composition is suitably used as a flame retardant masterbatch for dispersing the phosphorus-based flame retardant (B) in a material resin composition (full compound) for a resin product. The resin composition contains a sufficiently large amount of the phosphorus-based flame retardant (B). This further increases the degree of freedom in the composition of the full compound. Therefore, it is possible to apply the resin composition to production of various resin products which require flame retardancy.

The resin composition preferably has moderate antistatic properties, from the viewpoint of increasing the handleability when the resin composition is used as a masterbatch. From this viewpoint, the surface resistance of the resin composition may be not more than 1×10¹²Ω·cm, not more than 1×10¹¹Ω·cm, or not more than 1×10¹⁰Ω·cm. The lower limit is usually approximately 1×10⁵Ω·cm. The surface resistance of the resin composition can be measured, for example, in accordance with JIS K 6911.

A masterbatch obtained by pelletizing the resin composition (i.e., pellets of the resin composition) preferably has a specific surface state, from the viewpoint of increasing the handleability when the resin composition is used as the masterbatch. From such a viewpoint, the surface roughness (arithmetic average roughness Ra) of pellets of the resin composition is preferably not more than 5 µm, more preferably not more than 4 µm, even more preferably not more than 3.5 µm, and particularly preferably not more than 3 µm. From the viewpoint of the handleability, the surface roughness (arithmetic average roughness Ra) of the pellets of the resin composition may be not less than 0.5 pm.

From a similar viewpoint, the surface roughness (maximum peak height Rp) of the pellets of the resin composition is preferably not more than 15 µm, more preferably not more than 10 µm, and even more preferably not more than 9 µm. From the viewpoint of the handleability, the surface roughness (maximum peak height Rp) of the pellets of the resin composition may be not less than 1 µm.

From a similar viewpoint, the surface roughness (maximum valley depth Rv) of the pellets of the resin composition is preferably not more than 15 µm, more preferably not more than 10 µm, and even more preferably not more than 9 µm. From the viewpoint of the handleability, the surface roughness (maximum valley depth Rv) of the pellets of the resin composition may be not less than 1 µm.

From a similar viewpoint, the surface roughness (maximum height Rz) of the pellets of the resin composition is preferably not more than 30 µm, more preferably not more than 25 µm, and even more preferably not more than 20 µm. From the viewpoint of the handleability, the surface roughness (maximum height Rz) of the pellets of the resin composition may be not less than 5 µm.

From a similar viewpoint, the surface roughness (maximum profile height Rt) of the pellets of the resin composition is preferably not more than 30 µm, more preferably not more than 25 µm, and even more preferably not more than 20 µm. From the viewpoint of the handleability, the surface roughness (maximum profile height Rt) of the pellets of the resin composition may be not less than 5 µm.

The surface roughness of the pellets of the resin composition is measured as follows. Three pellets of the obtained resin composition are randomly selected. Then, measurement is carried out with respect to 100-µm wide portions at two surfaces, other than cut surfaces, of each pellet with use of a hybrid laser microscope (manufactured by Lasertec Corporation, OPTELICS HYBRID C3). An average value of measured surface roughnesses is used (in conformity with JIS B0601: 2001 (ISO4278: 1997)).

In a case where the surface roughness of the pellets of the resin composition is within the above range, it is possible to prevent falling of a powder of a flame retardant component and improve the transportability (flowability) of the pellets of the resin composition. Therefore, the pellets, having such a surface roughness, of the resin composition is particularly suitable as a masterbatch.

Generally, in a flame retardant masterbatch, as the concentration of a flame retardant becomes higher, the surface roughness of the masterbatch tends to become more noticeable. In contrast, as is clear from the above, although the pellets (flame retardant masterbatch) of the resin composition in accordance with an embodiment of the present invention contains the flame retardant at a high concentration, the pellets of the resin composition each have less surface roughness and each have a relatively favorable surface state. Therefore, the pellets of the resin composition are excellent in transportability (flowability), and exhibit favorable handleability. The reason why the pellets each have such a surface state is not clear, but the surface state is considered to be one of effects brought about by the acid-modified polyolefin-based resin (C).

### [Method for producing resin product]

An embodiment of the present invention includes a method for producing a resin product, the method including molding a product resin composition to produce a resin product, the product resin composition being obtained by diluting the above resin composition with a material composition. Since the above resin composition contains the phosphorus-based flame retardant (B) at a high concentration, the resin composition is suitably used as a masterbatch for a flame retardant.

A resin product in accordance with an aspect of the present invention is constituted by the foregoing resin composition in accordance with the present embodiment. The shape of the resin product is not particularly limited, and the resin product can have various shapes such as a resin plate, a sheet, a film, a cable, and an irregularly shaped product.

The resin product is obtained by molding the above resin composition. A molding method is not particularly limited, and examples thereof include extrusion processing, calendaring, injection molding, rolling, compression molding, and blow molding. The temperature during molding of the resin composition is, for example, 170°C to 260°C.

The material composition contains, for example, a matrix resin and a material component(s) other than the matrix resin and the foregoing resin composition.

### [Matrix resin]

The foregoing thermoplastic resin (A) can be employed as the matrix resin. The thermoplastic resin (A) serving as the matrix resin may be the same as or may be different from the thermoplastic resin (A) contained in the above resin composition. However, the thermoplastic resin (A) serving as the matrix resin is preferably the same as the thermoplastic resin (A) contained in the above resin composition. The ratio of the matrix resin to the foregoing resin composition may be determined as appropriate on the basis of flame retardancy which the resin product is required to have. For example, the ratio may be 100% by mass to 500% by mass.

It is suitable to employ, from the above-listed thermoplastic resins (A), a polyolefin-based resin as the matrix resin and a polyolefin-based resin as the thermoplastic resin (A) contained in the resin composition, from the viewpoint of improving the flame retardancy.

### [Other material components]

The material composition may contain at least one type of inorganic fiber filler (D) selected from the group consisting of glass fibers and carbon fibers. One type of inorganic fiber filler (D) may be used alone or two or more types of inorganic fiber fillers (D) may be used in combination.

The type of glass fibers is not particularly limited, and any glass fibers, such as E-glass, C-glass, S-glass, and D-glass, can be used. The form of the glass fibers is also not particularly limited, and any glass fibers, such as a chopped strand, a roving, a yarn, and glass wool, can be used. In terms of workability, a chopped strand or glass wool is preferable.

The type of carbon fibers is not particularly limited, and any carbon fibers, such as polyacrylonitrile (PAN)-based carbon fibers, pitch-based carbon fibers, and graphite fibers, can be used. The form of the carbon fibers is also not particularly limited, and any carbon fibers, such as a filament, a regular tow, a large tow, a stable yarn, and a chopped strand, can be used. In terms of the workability, a chopped strand is preferable.

In a case where the material composition contains the inorganic fiber filler (D), the proportion of the inorganic fiber filler (D) to the total mass of the material composition is preferably not less than 0.01% by mass and more preferably not less than 0.1% by mass, but is preferably not more than 50% by mass, more preferably not more than 40% by mass, more preferably not more than 30% by mass, more preferably not more than 25% by mass, more preferably not more than 10% by mass, even more preferably not more than 5% by mass, and particularly preferably not more than 3% by mass. In a case where the proportion of the inorganic fiber filler (D) is equal to or higher than the lower limit, a ripping preventing effect and a smoking suppressing effect are easily brought about. In a case where the proportion of the inorganic fiber filler (D) is equal to or lower than the upper limit, the intrinsic physical properties of the matrix resin are unlikely to be impaired.

In a case where the material composition contains the inorganic fiber filler (D), the material composition may further contain an interface strength improver (E) for the inorganic fiber filler (D). In terms of, in particular, the compatibility with the thermoplastic resin (A) such as a polyolefin resin or the like, a polymer having an olefin skeleton (excluding the polyolefin resin and the copolymer (C)) is preferable as the interface strength improver (E). The strength of an interface is further improved by the olefin skeleton being compatible with the polyolefin resin.

The interface strength improver (E) preferably has an acidic group. A reaction between the inorganic fibrous filler (D) and the acidic group further improves the strength of the interface. Examples of the acidic group include carboxyl groups, carboxylic acid anhydride groups, sulfonic acid groups, sulfinic acid groups, phosphonic acid groups, and phosphinic acid groups. The acidic group is preferably at least one selected from the group consisting of carboxyl groups, carboxylic acid anhydride groups, sulfonic acid groups, sulfinic acid groups, phosphonic acid groups, and phosphinic acid groups, more preferably at least one selected from the group consisting of carboxyl groups, carboxylic acid anhydride groups, and phosphonic acid group, and particularly preferably at least one selected from the group consisting of carboxyl groups and carboxylic anhydride groups.

Examples of a method for producing the interface strength improver (E) having the olefin skeleton and the acidic group include (1) a method in which an olefin resin is pyrolyzed at a high temperature so as to have a low molecular weight, and then a compound having an acidic group or a monomer having an acidic group is added, (2) a method in which a low-molecular-weight olefin resin is polymerized, and then a compound having an acidic group or a monomer having an acidic group is added; and (3) α-olefin and a compound having an acidic group or a monomer having an acidic group are copolymerized. As a polymerization method, a radical polymerization method, such as solution polymerization, emulsion polymerization, suspension polymerization, or mass polymerization, or a living polymerization method can be employed. A method in which a macro monomer is formed and then polymerized can also be employed. Examples of the compound having an acidic group or the monomer having an acidic group include acrylic acid, methacrylic acid, maleic acid, fumaric acid, maleic anhydride, and citraconic anhydride. In particular, maleic anhydride is suitable.

Examples of commercially available products of the interface strength improver (E) include: UMEX (registered trademark) 1001 and 1010 (manufactured by Sanyo Chemical Industries, Ltd.); and Kayabrid (registered trademark of Kayaku Akzo Corporation) 002PP and 003PP (manufactured by Kayaku Nouryon Corporation).

The material composition may contain at least one selected from the group consisting of antioxidants, ultraviolet absorbers, light stabilizers, and anti-aging agents.

Examples of the antioxidants include phenol-based antioxidants, phosphorus-based antioxidants, and thioether-based antioxidants. Examples of the phenol-based antioxidants include 2,6-ditert-butyl-p-cresol, 2,6-diphenyl-4-octadecyloxyphenol, distearyl(3,5-di-tert-butyl-4-hydroxybenzyl)phosphonate, 1,6-hexamethylenebis[(3,5-ditert-butyl-4-hydroxyphenyl)propionamide], 4,4'-thiobis(6-tert-butyl-m-cresol), 2,2'-methylenebis(4-methyl-6-tertbutylphenol), 2,2'-methylenebis(4-ethyl-6-tert-butylphenol), 4,4'-butylidenebis(6-tert-butyl-m-cresol), 2,2'-ethylidenebis(4,6-ditert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-ditert-butyl-4-hydroxybenzyl)isocyanurate, 1,3,5-tris(3,5-ditert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-ditert-butyl-4-hydroxyphenyl)propionate, tetrakis [3-(3,5-ditert-butyl-4-hydroxyphenyl)methyl propionate]methane, thiodiethyleneglycol bis[(3,5-ditert-butyl-4-hydroxyphenyl)propionate], 1,6-hexamethylenebis[(3,5-ditert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-ditert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4,8,10-tetraoxaspiro[5,5]undecane, and triethyleneglycol bis[(3-tert-butyl-4-hydroxy-5-methylphenyl)propionate]. The amount of a phenol-based antioxidant contained is preferably not less than 0.001 parts by mass and more preferably not less than 0.05 parts by mass, but is preferably not more than 10 parts by mass and more preferably not more than 5 parts by mass, with respect to 100 parts by mass of a synthetic resin component in the full compound.

Examples of the phosphorus-based antioxidants include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-ditert-butylphenyl)pentaerythritol diphosphite, bis(2,6-ditert-butyl-4-methylphenyl)pentaerythritol diphosphite, bis(2,4,6-tritert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-ditert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-ditert-butylphenyl)fluorophosphite, tris(2-[(2,4,8,10-tetrakis tert-butyldibenzo[d,f][1,3,2]dioxaphosphepin-6-yl)oxy]ethyl)amine, phosphite of 2-ethyl-2-butylpropylene glycol and 2,4,6-tritert-butylphenol, and tris(2,4-di-tert-butylphenyl) phosphite. The amount of a phosphorus-based antioxidant contained is preferably not less than 0.001 parts by mass and more preferably not less than 0.05 parts by mass, but is preferably not more than 10 parts by mass and more preferably not more than 5 parts by mass, with respect to 100 parts by mass of the synthetic resin component in the full compound.

Examples of the thioether-based antioxidants include: dialkylthiodipropionates such as dilauryl thiodipropionate, dimyristyl thiodipropionate, and distearyl thiodipropionate; and pentaerythritol tetra(β-alkylthiopropionic acid esters). The amount of a thioether-based antioxidant contained is preferably not less than 0.001 parts by mass and more preferably not less than 0.05 parts by mass, but is preferably not more than 10 parts by mass and more preferably not more than 5 parts by mass, with respect to 100 parts by mass of the synthetic resin component in the full compound.

Examples of the ultraviolet absorbers include: 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-ditert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates such as phenylsalicylate, resorcinol monobenzoate, 2,4-ditert-butylphenyl-3,5-ditert-butyl-4-hydroxybenzoate, 2,4-ditert-amylphenyl-3,5-ditert-butyl-4-hydroxybenzoate, and hexadecyl-3,5-ditert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-ditert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-ditert-butylphenyl)-s-triazine. The amount of an ultraviolet absorber contained is preferably not less than 0.001 parts by mass and more preferably not less than 0.05 parts by mass, but is preferably not more than 30 parts by mass and more preferably not more than 10 parts by mass, with respect to 100 parts by mass of the synthetic resin component in the full compound.

Examples of the light stabilizers include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-tetramethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-ditert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, and 1,6,11-tris[2,4-bis(N-butyl-N-(1,2,2,6,6-pentamethyl-4-piperidyl)amino)-s-triazine-6-yl]aminoundecane. The amount of a light stabilizer contained is preferably not less than 0.001 parts by mass and more preferably not less than 0.05 parts by mass, but is preferably not more than 30 parts by mass and more preferably not more than 10 parts by mass, with respect to 100 parts by mass of the synthetic resin component in the full compound.

The material composition may contain a filler other than the inorganic fiber filler (D). The other filler may be a fibrous, plate-shaped, granular, or powder-shaped filler. Specific examples thereof include: inorganic fibrous reinforcers such as asbestos fibers, metal fibers, potassium titanate whiskers, aluminum borate whiskers, magnesium-based whiskers, silicon-based whiskers, wollastonite, sepiolite, asbestos, slag fibers, zonolite, ellestadite, gypsum fibers, silica fibers, silica · alumina fibers, zirconia fibers, boron nitride fibers, silicon nitride fibers, and boron fibers; organic fibrous reinforcers such as polyester fibers, nylon fibers, acrylic fibers, regenerated cellulose fibers, acetate fibers, kenaf, ramie, cotton, jute, hemp, sisal, flax, linen, silk, Manila hemp, sugarcane, wood pulp, paper waste, waste paper, and wool; and plate-shaped or granular reinforcers such as glass flakes, non-swelling mica, graphite, metal foil, ceramic beads, clay, mica, sericite, zeolite, bentonite, dolomite, kaolin, fine powder silica, feldspar powder, potassium titanate, shirasu balloon, calcium carbonate, magnesium carbonate, barium sulfate, calcium oxide, aluminum oxide, titanium oxide, titanium dioxide, aluminum silicate, gypsum, novaculite, dawsonite, and white clay. These fillers may be coated or sized with a thermoplastic resin, such as an ethylene-vinyl acetate copolymer, or a thermosetting resin, such as an epoxy resin. These fillers may be treated with a coupling agent such as aminosilane and epoxysilane. The amount of the other filler contained is preferably not less than 10 parts by mass and preferably not less than 20 parts by mass, but is preferably not more than 60 parts by mass and more preferably not more than 50 parts by mass, with respect to 100 parts by mass of the synthetic resin component in the full compound.

The material composition may contain a crystal nucleating agent. As the crystal nucleating agent, a crystal nucleating agent which is generally used for a polyolefin resin can be used as appropriate. Examples of the crystal nucleating agent include inorganic crystal nucleating agents and organic crystal nucleating agents.

Specific examples of the inorganic crystal nucleating agents include metal salts such as kaolinite, synthetic mica, clay, zeolite, graphite, carbon black, magnesium oxide, titanium oxide, calcium sulfide, boron nitride, calcium carbonate, barium sulfate, aluminum oxide, neodymium oxide, and phenylphosphonate. These inorganic crystal nucleating agents may be modified with organic matter so as to increase dispersibility in the composition.

Specific examples of the organic crystal nucleating agents include: organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonic acid salts such as sodium p-toluene sulfonate and sodium sulfoisophthalate; carboxylic acid amides such as stearic acid amide, ethylene bis(lauric acid amide), palmitic acid amide, hydroxystearic acid amide, erucic acid amide, and trimesic acid tris(t-butylamide); benzylidene sorbitol and derivatives thereof; phosphorus compound metal salts such as sodium-2,2'-methylenebis(4,6-di-t-butylphenyl)phosphate; and 2,2-methylbis(4,6-di-t-butylphenyl)sodium.

The material composition may contain a plasticizer. As the plasticizer, a plasticizer which is generally used for a polyolefin resin can be used as appropriate. Examples of the plasticizer include polyester-based plasticizers, glycerin-based plasticizers, polyvalent carboxylic acid ester-based plasticizers, polyalkylene glycol-based plasticizers, and epoxy-based plasticizers. One of these plasticizers may be used alone or two or more of these plasticizers may be used in combination.

Specific examples of the polyester-based plasticizers include: polyesters made of (i) an acid component such as adipic acid, sebacic acid, terephthalic acid, isophthalic acid, naphthalene dicarboxylic acid, diphenyldicarboxylic acid, and rosin and (ii) a diol component such as propylene glycol, 1,3-butanediol, 1,4-butanediol, 1,6-hexanediol, ethylene glycol, and diethylene glycol; and polyesters made of hydroxycarboxylic acid, such as polycaprolactone. Ends of these polyesters may be capped with monofunctional carboxylic acid or monofunctional alcohol or may be capped with an epoxy compound or the like.

Specific examples of the glycerin-based plasticizers include glycerin monoacetomonolaurate, glycerin diacetomonolaurate, glycerin monoacetomonostearate, glycerin diacetomonooleate, and glycerin monoacetomonomontanate.

Specific examples of the polyvalent carboxylic acid ester-based plasticizers include: phthalic acid esters such as dimethyl phthalate, diethyl phthalate, dibutyl phthalate, dioctyl phthalate, diheptyl phthalate, dibenzyl phthalate, and butylbenzyl phthalate; trimellitic acid esters such as tributyl trimellitate, trioctyl trimellitate, and trihexyl trimellitate; adipic acid esters such as diisodecyl adipate, n-octyl-n-decyl adipate, methyl diglycol butyl diglycol adipate, benzylmethyl diglycol adipate, and benzylbutyl diglycol adipate; citric acid esters such as acetyl triethyl citrate and acetyl tributyl citrate; azelaic acid esters such as di-2-ethylhexyl azelate; and sebacic acid esters such as dibutyl sebacate and di-2-ethylhexyl sebacate.

Specific examples of the polyalkylene glycol-based plasticizers include: polyalkylene glycols such as polyethylene glycol, polypropylene glycol, poly(ethylene oxide · propylene oxide) block and/or random copolymers, polytetramethylene glycol, ethylene oxide addition polymers of bisphenols, propylene oxide addition polymers of bisphenols, and tetrahydrofuran addition polymers of bisphenols; and endcapped compounds such as end epoxy-modified compounds, end ester-modified compounds, and end ether-modified compounds of these polyalkylene glycols.

The epoxy-based plasticizers generally indicate, for example, epoxy triglyceride made of alkyl epoxy stearate and soybean oil. In addition, it is also possible to use so-called epoxy resins which are mainly made from bisphenol A and epichlorohydrin.

Specific examples of the other plasticizers include: benzoic acid esters of aliphatic polyol such as neopentyl glycol dibenzoate, diethylene glycol dibenzoate, and triethylene glycol di-2-ethylbutyrate; fatty acid amides such as stearic acid amide; aliphatic carboxylic acid esters such as butyl oleate; oxyacid esters such as methyl acetyl ricinoleate and butyl acetyl ricinoleate; pentaerythritol; various sorbitols; polyacrylic acid esters; and paraffins.

The material composition may contain a fluorine-containing anti-dripping agent. Examples of the fluorine-containing anti-dripping agent include fluorine-containing polymers having fibril forming ability. Examples of such fluorine-containing polymers include: polytetrafluoroethylene (hereafter also referred to as "PTFE"); tetrafluoroethylene-based copolymers (e.g., tetrafluoroethylene/hexafluoropropylene copolymer); and polycarbonate resins produced from partially fluorinated polymers or fluorinated diphenols as disclosed in the publication of US Patent No. 4379910. Among others, PTFE is preferable.

PTFE having fibril forming ability has an extremely high molecular weight, and tends to become fibrous by coupling of PTFE due to external action such as a shear force. The molecular weight of PTFE is preferably not less than 1,000,000, and more preferably not less than 2,000,000, but is preferably not more than 10,000,000 and more preferably not more than 9,000,000, in terms of a number average molecular weight determined from a standard specific gravity. PTFE having fibril forming ability can be used in solid form or also in aqueous dispersion form.

Examples of commercially available products of PTFE having fibril forming ability include Teflon (registered trademark) 6J of Du Pont-Mitsui Fluorochemicals Co., Ltd. and POLYFLON (registered trademark) MPA FA500 and F-201L of Dikin Industries, Ltd. Examples of commercially available products of the aqueous dispersion of PTFE include Fluon (registered trademark of AGC Inc.) AD-939E manufactured by Asahi-ICI Fluoropolymers Co., Ltd., Fluon D-310 and D-210C manufactured by Dikin Industries, Ltd., and Teflon 31JR manufactured by Du Pont-Mitsui Fluorochemicals Co., Ltd.

In order to improve the dispersibility of PTFE having fibril forming ability in the full compound and further achieve favorable flame retardancy, favorable mechanical properties, and a favorable bending elastic modulus, it is also possible to use a PTFE mixture in which PTFE having fibril forming ability and the other resin are mixed. The proportion of PTFE to the total mass of the PTFE mixture is preferably not less than 1% by mass and more preferably not less than 5% by mass, but is preferably not more than 60% by mass and more preferably not more than 55% by mass. In a case where the proportion of PTFE is within the above range, it is possible to achieve favorable dispersibility of PTFE.

As the PTFE mixture, a PTFE mixture obtained, for example, by the following method can be used: (1) a method in which the aqueous dispersion of PTFE is mixed with an aqueous dispersion or a solution of the other resin, and an obtained mixture is coprecipitated to obtain a coagglutination mixture (a method disclosed in Japanese Patent Application Publication Tokukaishou, No. 60-258263, Japanese Patent Application Publication Tokukaishou, No. 63-154744, etc.); (2) a method in which the aqueous dispersion of PTFE is mixed with particles of the other dried resin (method disclosed in Japanese Patent Application Publication Tokukaihei No. 4-272957); (3) a method in which the aqueous dispersion of PTFE is uniformly mixed with a solution of the other resin and each medium is simultaneously removed from an obtained mixture (method disclosed in Japanese Patent Application Publication Tokukaihei No. 06-220210, Japanese Patent Application Publication Tokukaihei No. 08-188653, etc.); (4) a method in which a monomer which forms the other resin is polymerized in the aqueous dispersion of PTFE (method disclosed Japanese Patent Application Publication Tokukaihei No. 9-95583); or (5) a method in which the aqueous dispersion of PTFE and a dispersion of the other resin are uniformly mixed, a vinyl-based monomer is polymerized in an obtained mixed dispersion, and then a mixture is obtained (method disclosed in Japanese Patent Application Publication Tokukaihei No. 11-29679 etc.). Examples of commercially available products of the PTFE mixture include "METABLEN (registered trademark) A3000" of Mitsubishi Chemical Corporation and "BLENDEX (registered trademark of Galata Chemical Corporation) B449" of GE Specialty Chemicals Inc.

The amount of the fluorine-containing anti-dripping agent is, as the amount of PTFE, preferably not less than 0.01 parts by mass, more preferably not less than 0.05 parts by mass, and even more preferably not less than 0.1 parts by mass, but is preferably not more than 1 part by mass, more preferably not more than 0.8 parts by mass, and even more preferably not more than 0.5 parts by mass, per 100 parts by mass of the full compound.

The material composition may be a set of the foregoing materials, may be a mixture of the foregoing materials, or may be a melt-kneaded product of the foregoing materials. That is, the material composition may be a masterbatch of the foregoing other component(s) with the matrix resin as a dispersion medium.

### [Main effects]

The foregoing resin composition contains the phosphorus-based flame retardant (B) in an amount as large as not less than 70% by mass in a state where the phosphorus-based flame retardant (B) is favorably dispersed in the resin composition.

For realization of a high concentration of a target component in a masterbatch, it is generally considered necessary that the target component melt during kneading. Usually, the phosphorus-based flame retardant (B) is a fine powder, and has a high melting point. Therefore, the phosphorus-based flame retardant (B) does not melt at the processing temperature of the thermoplastic resin (A) such as polypropylene. Since the phosphorus-based flame retardant (B) is a fine powder, it is desired that the phosphorus-based flame retardant (B) be formed into a masterbatch from the viewpoint of handling. However, as described above, the phosphorus-based flame retardant (B) does not melt at the processing temperature of the thermoplastic resin (A). Thus, it is usually considered difficult to appropriately disperse, in the thermoplastic resin (A), the phosphorus-based flame retardant (B) at a high concentration.

However, according to the foregoing resin composition, by kneading the phosphorus-based flame retardant (B) together with the acid-modified polyolefin-based resin (C), it is possible to appropriately disperse the phosphorus-based flame retardant (B) without melting. Moreover, by increasing the amount of the acid-modified polyolefin-based resin (C), it is possible to realize a higher concentration of the phosphorus-based flame retardant (B). Thus, since the resin composition contains a high concentration of the phosphorus-based flame retardant in a state where the phosphorus-based flame retardant is favorably dispersed, it is possible to suitably use the resin composition as a masterbatch of a flame retardant in a full compound of a resin product, and possible to further increase the degree of freedom in the composition of materials other than the flame retardant in the full compound.

In a case where the foregoing resin composition is used as a masterbatch, it is possible to cause a full compound to exhibit excellent flame retardancy while sufficiently maintaining the intrinsic physical properties (e.g., mechanical strength and bending elastic modulus) of a matrix resin, as described in Patent document 1.

Moreover, the foregoing resin composition has reduced electrostatic properties. Therefore, when the resin composition is used as a masterbatch, it is possible to cause the resin composition to exhibit excellent handleability.

Furthermore, the foregoing resin composition can contain, as described above, the phosphorus-based flame retardant (B) at a higher concentration as a masterbatch, and accordingly contains the acid-modified polyolefin-based resin (C) in a larger amount. The acid-modified polyolefin-based resin (C) has a low molecular weight, and has the properties of wax. Therefore, even in a case where the resin composition contains the phosphorus-based flame retardant (B) in a large amount, heat generation due to shearing tends to be prevented during production or use of a masterbatch. Therefore, an increase in resin temperature and an increase in resin pressure tend to be prevented. This makes it possible to produce or use, as a masterbatch, the foregoing resin composition under a condition looser than a condition corresponding to the amount of the phosphorus-based flame retardant (B). Thus, processing during production and use of a masterbatch (production of a full compound) becomes easier.

Furthermore, in a case where the foregoing resin composition is used as a masterbatch to produce a film-shaped resin product, the mechanical properties of the resin product can be further increased while high flame retardancy is maintained. The mechanism for this is not clear, but is considered to be that the acid-modified polyolefin-based resin (C) improves the dispersibility of the phosphorus-based flame retardant (B) in the resin composition and also that the strength of the interface between the phosphorus-based flame retardant (B) and a matrix resin is increased.

Aspects of the present invention can also be expressed as follows:
As is clear from the above description, a resin composition in accordance with a first aspect of the present invention includes: a thermoplastic resin (A), a phosphorus-based flame retardant (B), and an acid-modified polyolefin-based resin (C), wherein a proportion of the phosphorus-based flame retardant (B) is not less than 70% by mass. The first aspect can be suitably used as a masterbatch for a flame retardant. Thus, in the first aspect, the resin composition suitable to increase the degree of freedom in the composition of a flame-retardant resin product is realized.

A second aspect of the present invention is such that, in the first aspect, the proportion of the phosphorus-based flame retardant (B) is not less than 75% by mass. The second aspect is more effective from the viewpoint of increasing the above degree of freedom in the resin product and from the viewpoint of increasing the mechanical properties of the resin product.

A third aspect of the present invention is such that, in the first aspect or the second aspect, a proportion of the acid-modified polyolefin-based resin (C) is not more than 10% by mass. The third aspect is more effective from the viewpoint of increasing the tensile properties of the resin composition.

A fourth aspect of the present invention is such that, in any one of the first through third aspects, a proportion of the acid-modified polyolefin-based resin (C) to the phosphorus-based flame retardant (B) is not more than 15% by mass. In the fourth aspect, the proportion of the phosphorus-based flame retardant (B) is relatively high. Thus, the fourth aspect is more effective from the viewpoint of increasing the above degree of freedom in the resin product and from the viewpoint of increasing the mechanical properties of the resin product.

A fifth aspect of the present invention is such that, in any one of the first through fourth aspects, the phosphorus-based flame retardant (B) includes an intumescent-based flame retardant. In the fifth aspect, diffusion of a decomposition product or heat transfer is prevented during burning of the resin composition. Thus, the fifth aspect is more effective from the viewpoint of increasing flame retardancy.

A sixth aspect of the present invention is such that, in any one of the first through fifth aspects, the acid-modified polyolefin-based resin (C) includes a copolymer of α-olefin and unsaturated carboxylic acid. The sixth aspect is more effective from the viewpoint of increasing the compatibility between the thermoplastic resin (A) and the modified polyolefin-based resin (C) and the compatibility between the phosphorus-based flame retardant (B) and the modified polyolefin-based resin (C).

A seventh aspect of the present invention is such that, in the sixth aspect, the α-olefin has not less than 15 carbon atoms. The seventh aspect is more effective from the viewpoint of increasing the compatibility with a polyolefin resin which is the thermoplastic resin (A).

A method for producing a resin product in accordance with an eighth aspect of the present invention includes molding a product resin composition to produce a resin product, the product resin composition being obtained by diluting a resin composition in any one of the first through seventh aspects with a material composition. In the eighth aspect, the resin composition in any one of the above aspects is used as a masterbatch for a flame retardant. Thus, in the eighth aspect, realized is a method for producing a resin product, the method being suitable to increase the degree of freedom in the composition of a flame-retardant resin product.

A method for producing a resin product in accordance with a ninth aspect of the present invention is a flame retardant masterbatch which is obtained by pelletizing a resin composition in any one of the first through seventh aspects. The ninth aspect is more effective from the viewpoint of increasing handleability during use.

The method for producing a resin product in accordance with a tenth aspect of the present invention is such that, in the ninth aspect, an arithmetic average roughness Ra of surfaces of pellets is not more than 5 µm. The tenth aspect is more effective from the viewpoint of increasing the handleability during use.

The present invention makes it possible to design, at a high degree of freedom, a resin product having high flame retardancy and produce such a resin product. The present invention having such a feature enables replacement of a metal product with a light-weight resin product. Thus, for example, the present invention is also expected to contribute to achieving Goal 9: Industries, innovation, and infrastructure, etc. of the sustainable development goals (SDGs) advocated by the United Nations.

The present invention is not limited to the embodiments described above, but may be altered in various ways within the scope of the claims. The present invention also encompasses, in its technical scope, any embodiment derived by combining, as appropriate, technical means disclosed in differing embodiments.

### Examples

The present invention is more specifically described with reference to examples. Note, however, that the present invention is not limited by the examples below. Note that, in the examples below etc., % is based on mass, unless otherwise specified. Evaluations were carried out on the following items.

### (1) Flame retardancy (UL94)

Flame retardancy was determined with use of an obtained molded product (1/ 16-inch test bar) by a vertical burning test in conformity with the UL94 standard. A "total burning time" indicates the sum of flaming times in the burning test. The "number of drips" indicates the number of particles (drips) which drip from a specimen during the burning test. "Determination" indicates a rating determined in accordance with (1) a burning time after application of a flame to each specimen, (2) the sum of burning times of five samples, (3) a position in each specimen to which position burning has reached, (4) ignition by dripping, and (5) afterglow after the second application of a flame, which are specified in the UL94 standard.

### (2) Tensile properties

A maximum tensile strength (MPa) and a tensile elongation (%) were measured with use of an obtained molded product (JIS K7139-A1 or JIS K6251-1, dumbbell-shaped specimen) in conformity with JIS K7161-1.

### (3) Bending properties

An obtained molded product (JIS K7139-A1, dumbbell-shaped specimen) was cut to a length of 80 mm, and a bending elastic modulus (MPa) and a maximum bending strength (MPa) were measured in conformity with JIS K7171.

### (4) Charpy strength

A Charpy impact strength (kJ/m²) was measured with use of an obtained molded product in conformity with JIS K7111-1: 2012.

### (5) Surface resistance

Pellets of an obtained resin composition were hot-pressed at 200°C to obtain a 100-mm square and 0.3-mm thick sheet specimen. The surface resistance of this sheet specimen was measured with use of a surface resistance tester TRACK MODEL-100.

### (6) Surface roughness

The surface roughness of surfaces of pellets of an obtained resin composition was measured for the following items. Results are shown in Table 1. Note, here, that the measurement was carried out with respect to 100-µm wide portions at surfaces (two surfaces), other than cut surfaces, of each of randomly selected three pellets, with use of a hybrid laser microscope (OPTELICS HYBRID C3, manufactured by Lasertec Corporation). An average value of measured surface roughnesses was used (in conformity with JIS B0601: 2001 (ISO4278: 1997)).
Ra (µm) Arithmetic average roughness
Rp (µm) Maximum peak height
Rv (µm) Maximum valley depth
Rz (µm) Maximum height
Rt (µm) Maximum profile height

The following materials were used as raw materials.

### <Thermoplastic resin (A)>

A-1: Polypropylene resin (manufactured by Japan Polypropylene Corporation, "NOVATEC (registered trademark) SA06GA", melt mass flow rate: 60 g/10 minutes)
A-2: Polypropylene resin (manufactured by Japan Polypropylene Corporation, "NOVATEC (registered trademark) BC10HRF", melt mass flow rate: 100 g/10 minutes)
A-3: Polypropylene resin (manufactured by Japan Polypropylene Corporation, "NOVATEC (registered trademark) BC05B", melt mass flow rate: 50 g/10 minutes)
A-4: Long glass fiber (GF)-containing PP compound (manufactured by Japan Polypropylene Corporation, "FUNCSTER (registered trademark) LR24A", (GF=40%))

### <Phosphorus-based flame retardant (B)>

Phosphorus-based flame retardant composition (manufactured by ADEKA Corporation, "ADK STAB (registered trademark) FP-2500S", containing piperazine pyrophosphate in an amount of 50% to 60%, melamine pyrophosphate in an amount of 35% to 45%, and zinc oxide in an amount of 3% to 6% with respect to the total mass of the phosphorus-based flame retardant composition)

### <Acid-modified polyolefin (PO)-based resin (C)>

α-olefin · maleic anhydride copolymer (manufactured by Mitsubishi Chemical Corporation, "DIACARNA (registered trademark) 30M", weight-average molecular weight: 7,800)

### [Example 1]

The following components were blended in the following amounts, and mixed manually. Subsequently, an obtained mixture was melt-kneaded with use of a φ30-mm co-rotating twin screw extruder (model name: "BT-30", manufactured by Research Laboratory of Plastics Technology Co., Ltd., L/D=30) at a screw rotation speed of 250 rpm and at a cylinder temperature of 200°C to obtain a pellet-shaped resin composition 1. Note that "L/D" indicates the ratio between the length (L) and the diameter (D) of a screw.

| | |
|---|---|
| Phosphorus-based flame retardant (B) | 70% |
| Acid-modified polyolefin-based resin (C) | 3.5% |
| Thermoplastic resin (A) A-1 | Rest |

A sheet specimen was obtained by hot-pressing the pellet-shaped resin composition 1 at 200°C, and the surface resistance of the sheet specimen was measured. As a result, the surface resistance was 1×10¹⁰ Ω·cm.

Next, the following components were manually mixed in the following amounts. Subsequently, an obtained mixture was injection-molded with use of an all-electric injection molding machine "SE100DU" (Sumitomo Heavy Industries, Ltd.) at a cylinder temperature of 180°C to 200°C (180-190-200-200-200°C) and at a mold temperature of 80°C to obtain a specimen A which was a dumbbell-shaped specimen specified in the foregoing JIS K7139-A1.

| | |
|---|---|
| Thermoplastic resin (A) A-4 | 63.0% |
| Thermoplastic resin (A) A-1 | 8.0% |
| Resin composition 1 | 29.0% |

Furthermore, under the above conditions for injection molding, a specimen B which was 80.0-mm long, 10.0-mm wide, and 4-mm thick and which had a V-notch was obtained. These specimens A and B were each regarded as a resin product 1.

### [Example 2]

A resin composition 2 was obtained by producing the resin composition 2 similarly to the resin composition 1, except that the amount of the phosphorus-based flame retardant (B) was changed to 75% and the amount of the acid-modified polyolefin-based resin (C) was changed to 4.6%. The surface roughness of the pellet-shaped resin composition 2 was measured with use of a three-dimensional microscope. Specimens A and B were obtained by producing the specimens A and B similarly to the resin product 1, except that the resin composition 2 was used in an amount of 27.0% instead of the resin composition 1 used in an amount of 29.0% and the amount of the thermoplastic resin (A) A-1 was changed to 10.0%. These specimens A and B were each regarded as a resin product 2.

### [Example 3]

A resin composition 3 was obtained by producing the resin composition 3 similarly to the resin composition 1, except that the thermoplastic resin (A) A-2 was used instead of the thermoplastic resin (A) A-1, the amount of the phosphorus-based flame retardant (B) was changed to 78%, and the amount of the acid-modified polyolefin-based resin (C) was changed to 3.90%. Specimens A and B were obtained by producing the specimens A and B similarly to the resin product 1, except that the resin composition 3 was used in an amount of 26.0% instead of the resin composition 1 used in an amount of 29.0% and the amount of the thermoplastic resin (A) A-1 was changed to 11.0%. These specimens A and B were each regarded as a resin product 3.

### [Reference example]

A resin composition 4 was obtained by producing the resin composition 4 similarly to the resin composition 1, except that the thermoplastic resin (A) A-3 was used instead of the thermoplastic resin (A) A-1, the amount of the phosphorus-based flame retardant (B) was changed to 50%, and the acid-modified polyolefin-based resin (C) was not added. The surface roughness of the pellet-shaped resin composition 4 was measured.

### [Comparative Example 1]

A resin composition 5 was obtained by producing the resin composition 5 similarly to the resin composition 1, except that the amount of the phosphorus-based flame retardant (B) was changed to 60% and the amount of the acid-modified polyolefin-based resin (C) was changed to 2.0%. Specimens A and B were obtained by producing the specimens A and B similarly to the resin product 1, except that the resin composition 5 was used in an amount of 33.5% instead of the resin composition 1 used in an amount of 29.0% and the amount of the thermoplastic resin (A) A-1 was changed to 3.5%. These specimens A and B were each regarded as a resin product 5.

### [Comparative Example 2]

A resin composition 6 was obtained by producing the resin composition 6 similarly to the resin composition 1, except that the amount of the phosphorus-based flame retardant (B) was changed to 68% and the amount of the acid-modified polyolefin-based resin (C) was changed to 3.4%. Specimens A and B were obtained by producing the specimens A and B similarly to the resin product 1, except that the resin composition 6 was used in an amount of 30% instead of the resin composition 1 used in an amount of 29.0% and the amount of the thermoplastic resin (A) A-1 was changed to 7%. These specimens A and B were each regarded as a resin product 6.

The compositions of the materials of the resin compositions 1 to 6 are shown in Table 1. Results of measuring the surface roughnesses of the pellets of the resin compositions 2, 4, and 5 are shown in Table 2. The blending ratios at the time of the production of the resin products 1 to 3, 5, and 6 and the amounts of the components contained in the produced resin products 1 to 3, 5, and 6 are shown in Table 3.

### [Table 1]

**Table 1**

| Resin composition No. | Thermoplastic resin | | Phosphorus-based flame retardant (% by mass) | Acid-modified PO-based resin (% by mass) |
|---|---|---|---|---|
| | Type | MFR (g/10 min) | | |
| 1 | A-1 | 60 | 70 | 3.5 |
| 2 | A-1 | 60 | 75 | 4.6 |
| 3 | A-2 | 100 | 78 | 3.9 |
| 4 | A-3 | 50 | 50 | 0 |
| 5 | A-1 | 60 | 60 | 2.0 |
| 6 | A-1 | 60 | 68 | 3.4 |

### [Table 2]

**Table 2**

| Resin composition No. | Ra (µm) | Rp (µm) | Rv (µm) | Rz (µm) | Rt (µm) |
|---|---|---|---|---|---|
| 2 | 2.6 | 8.6 | 9.9 | 18.5 | 18.5 |
| 4 | 4.2 | 12.0 | 14.9 | 26.9 | 26.9 |
| 5 | 2.5 | 9.6 | 12.3 | 21.9 | 21.9 |

### [Table 3]

**Table 3**

| Resin product No. | Blending ratio before dilution | | | |
|---|---|---|---|---|
| | Thermoplastic resin | | Resin composition | |
| | A-4 (% by mass) | A-1 (% by mass) | Type - | Amount (% by mass) |
| 1 | 63 | 8 | No. 1 | 29 |
| 2 | 63 | 10 | No. 2 | 27 |
| 3 | 63 | 11 | No. 3 | 26 |
| 5 | 63 | 3.5 | No. 5 | 33.5 |
| 6 | 63 | 7 | No. 6 | 30 |

### [Table 3 (continued)]

**Table 3**

| Resin product No. | Composition after dilution | | | |
|---|---|---|---|---|
| | Thermoplastic resin component (% by mass) | Phosphorus-based flame retardant concentration (% by mass) | Acid-modified PO-based resin concentration (% by mass) | GF amount (% by mass) |
| 1 | 53.5 | 20.3 | 1.0 | 25.2 |
| 2 | 53.3 | 20.3 | 1.2 | 25.2 |
| 3 | 53.5 | 20.3 | 1.0 | 25.2 |
| 5 | 54.0 | 20.1 | 0.7 | 25.2 |
| 6 | 53.4 | 20.4 | 1.0 | 25.2 |

### [Example 4]

| | |
|---|---|
| Thermoplastic resin (A) A-1 | 57.0% |
| Resin composition 1 | 43.0% |

The above components were manually mixed in the above amounts. An obtained mixture was extrusion-molded in a sheet shape with use of a T die-equipped 25-mm single screw extruder at a cylinder temperature of 180°C to 200°C (180-190-190-200-200°C) and at a rotation speed of 30 rpm. An obtained molded product was taken off with use of a chill roller, a take-off machine, and a winding machine which were located downstream of the T die. A 300-pm thick film was thus obtained. The film was cut in a dumbbell shape No. 1 specified in the foregoing JIS K6251-1 to obtain a specimen C. The obtained specimen C was regarded as a resin product 7.

### [Example 5]

A specimen C was obtained by producing the specimen C similarly to the resin product 7, except that the amount of the thermoplastic resin (A) A-1 was changed to 60.0% and the resin composition 2 was used in an amount of 40.0% instead of the resin composition 1. The obtained specimen C was regarded as a resin product 8.

### [Example 6]

A specimen C was obtained by producing the specimen C similarly to the resin product 7, except that the amount of the thermoplastic resin (A) A-1 was changed to 61.5% and the resin composition 3 was used in an amount of 38.5% instead of the resin composition 1. The obtained specimen C was regarded as a resin product 9.

### [Comparative Example 3]

| | |
|---|---|
| Thermoplastic resin (A) A-1 | 70.0% |
| Phosphorus-based flame retardant (B) | 30.0% |

A specimen C was obtained by producing the specimen C similarly to the resin product 7, except that a mixture of the above components was used. The obtained specimen C was regarded as a resin product 10.

### [Comparative Example 4]

| | |
|---|---|
| Thermoplastic resin (A) A-1 | 68.5% |
| Phosphorus-based flame retardant (B) | 30.0% |
| Acid-modified polyolefin-based resin (C) | 1.50% |

A specimen C was obtained by producing the specimen C similarly to the resin product 7, except that a mixture of the above components was used. The obtained specimen C was regarded as a resin product 11.

### [Comparative Example 5]

A specimen C was obtained by producing the specimen C similarly to the resin product 7, except that the amount of the thermoplastic resin (A) A-1 was changed to 50% and the resin composition 5 was used in an amount of 50% instead of the resin composition 1. The obtained specimen C was regarded as a resin product 12.

### [Comparative Example 6]

A specimen C was obtained by producing the specimen C similarly to the resin product 7, except that the amount of the thermoplastic resin (A) A-1 was changed to 55.5% and the resin composition 6 was used in an amount of 44.5% instead of the resin composition 1. The obtained specimen C was regarded as a resin product 13.

Note that, for reference, specimens A and B were obtained similarly to the resin product 1 in Example 1 described above, except that the thermoplastic resin (A) A-1 was used instead of the resin composition 1. These specimens A and B were each regarded as a resin product 14.

### [Evaluation]

The foregoing specimens A were used to evaluate the flame retardancy, tensile properties, and bending properties of the resin products 1 to 3, 5, and 6. The foregoing specimens B were used to evaluate the Charpy strength. Results are shown in Table 4.

### [Table 4]

**Table 4**

| Resin product No. | UL94 | | | Tensile | | Bending | | |
|---|---|---|---|---|---|---|---|---|
| | Total burning time (sec) | Number of drips | Determination | Maximum tensile strength (MPa) | Elongation (%) | Elastic modulus (MPa) | Maximum bending strength (MPa) | Charpy strength (kJ/m²) |
| 1 | 39 | 5 | V-2 | 74 | 3 | 6272 | 112 | 7.2 |
| 2 | 9 | 0 | V-0 | 63 | 3 | 6374 | 104 | 6.8 |
| 3 | 10 | 0 | V-0 | 72 | 3 | 5983 | 108 | 7.0 |
| 5 | 16 | 0 | V-0 | 72 | 3 | 6754 | 112 | 7.1 |
| 6 | 14 | 0 | V-0 | 71 | 3 | 6580 | 113 | 7.4 |
| 14 | 702 | 5 | fail | 108 | 20 | 5135 | 142 | 15 |

The foregoing specimens C were used to evaluate the tensile properties of the resin products 7 to 13. The compositions of the materials of the resin products and measurement results are shown in Table 5.

### [Table 5]

**Table 5**

| Resin product No. | Blending ratio before dilution | | | Composition after dilution | | | Tensile | |
|---|---|---|---|---|---|---|---|---|
| | Thermoplastic resin A-1 (% by mass) | Resin composition | | Thermoplastic resin component (% by mass) | Phosphorus-based flame retardant (% by mass) | Acid-modified PO-based resin (% by mass) | Maximum tensile strength (MPa) | Elongation (%) |
| | | Type- | Amount (% by mass) | | | | | |
| 7 | 57 | No. 1 | 43 | 68.8 | 30.1 | 1.1 | 33 | 41 |
| 8 | 60 | No. 2 | 40 | 68.6 | 30 | 1.4 | 32 | 59 |
| 9 | 61.5 | No. 3 | 38.5 | 68.8 | 30 | 1.2 | 31 | 109 |
| 10 | 70 | - | - | 70 | 30 | 0 | 31 | 11 |
| 11 | 68.5 | - | - | 68.5 | 30 | 1.5 | 35 | 28 |
| 12 | 50 | No. 5 | 50 | 69.4 | 30.0 | 0.6 | 33 | 38 |
| 13 | 55.5 | No. 6 | 44.5 | 68.7 | 30.3 | 1 | 33 | 38 |

### [Discussion]

As shown in Tables 3 and 4, the resin products 1 to 3 obtained with use of the resin compositions 1 to 3, respectively, have excellent flame retardant properties while maintaining mechanical properties. Moreover, as shown in Tables 1 and 2, the resin compositions 1 to 3 each contains the phosphorus-based flame retardant at a high ratio. Therefore, for example, in a case where the resin compositions 1 to 3 are each used as a flame retardant masterbatch, it is possible to reduce the amount of the masterbatch which amount is needed when it is desired that a diluted resin product have a desired flame retardant concentration. This allows an increase in degree of freedom in the composition of the resin product. Thus, it is possible to obtain a resin product having a composition ratio which could not be conventionally realized.

As is clear from Table 5, the resin products 7 to 13 each contain the phosphorus-based flame retardant (B) in an amount of approximately 30% and the thermoplastic resin component in an amount of approximately 70%. That is, these resin products are substantially the same in composition. In spite of this fact, these resin products each have a tensile elongation greater than those of the resin products 10 and 11. As described above, the resin products 7 to 9 were obtained with use of the resin compositions 1 to 3, respectively, whereas the resin products 10 and 11 were obtained by directly mixing the materials, without use of the resin compositions 1 to 3. Thus, it is found that, although the obtained resin products are substantially the same in composition, using each of the resin compositions 1 to 3 as a masterbatch makes it possible to improve the tensile strength of a resin composition to be obtained (see Table 5). The reason for this is not clear at this stage, but is considered to be that the phosphorus-based flame retardant (B) is dispersed favorably and that the strength of the interface between the phosphorus-based flame retardant (B) and the thermoplastic resin (A) is high. Thus, it is found that using, as a masterbatch, a resin composition containing the phosphorus-based flame retardant (B) at a higher concentration can further increase the tensile elongation of a film-shaped resin product.

### Industrial Applicability

The present invention can be used to produce a resin product having high flame retardancy and a high degree of freedom in the composition.

## Claims

1. A resin composition comprising:
a thermoplastic resin (A), a phosphorus-based flame retardant (B), and an acid-modified polyolefin-based resin (C), wherein
a proportion of the phosphorus-based flame retardant (B) is not less than 70% by mass.

2. The resin composition as set forth in claim 1, wherein the proportion of the phosphorus-based flame retardant (B) is not less than 75% by mass.

3. The resin composition as set forth in claim 1, wherein a proportion of the acid-modified polyolefin-based resin (C) is not more than 10% by mass.

4. The resin composition as set forth in claim 1, wherein a proportion of the acid-modified polyolefin-based resin (C) to the phosphorus-based flame retardant (B) is not more than 15% by mass.

5. The resin composition as set forth in claim 1, wherein the phosphorus-based flame retardant (B) includes an intumescent-based flame retardant.

6. The resin composition as set forth in claim 1, wherein the acid-modified polyolefin-based resin (C) includes a copolymer of α-olefin and unsaturated carboxylic acid.

7. The resin composition as set forth in claim 6, wherein the α-olefin has not less than 15 carbon atoms.

8. A method for producing a resin product, the method comprising molding a product resin composition to produce a resin product, the product resin composition being obtained by diluting a resin composition recited in any one of claims 1 through 7 with a material composition.

9. A flame retardant masterbatch which is pellets of a resin composition recited in any one of claims 1 through 7.

10. The flame retardant masterbatch as set forth in claim 9, wherein an arithmetic average roughness Ra of surfaces of the pellets is not more than 5 µm.
